# EUROPEAN PATENT APPLICATION

(11) **EP 3 699 780 A1**
(43) Date of publication of application: **26.08.2020**
(21) Application number: 20157563.6
(22) Date of filing: 17.02.2020
(51) Int. Cl.: G06F 16/908, G06F 16/901, G06F 16/28

(54) **METHOD AND APPARATUS FOR RECOMMENDING ENTITY, ELECTRONIC DEVICE AND COMPUTER READABLE MEDIUM**

(30) Priority: 21.02.2019 CN 201910130128
(71) Applicant: BEIJING BAIDU NETCOM SCIENCE AND TECHNOLOGY CO. LTD., 100085 Beijing (CN)
(72) Inventor: LU, Jiajun, Beijing, 100085 (CN); LIN, Zenan, Beijing, 100085 (CN)
(74) Representative: Maiwald Patent- und Rechtsanwaltsgesellschaft mbH

(57) **Abstract**

The present disclosure provides a method and an apparatus for recommending an entity, an electronic device and a computer readable medium. The method includes: determining a request entity, determining at least two characteristics of the request entity and determining a first vector corresponding to the request entity according to the at least two characteristics of the request entity; determining a plurality of candidate entities, determining at least one characteristic for each of the plurality of candidate entities, and determining a second vector corresponding to each of the plurality of candidate entities according to the characteristic of the candidate entity; determining a similarity between the second vector and the first vector; selecting at least one target entity from the plurality of candidate entities according to the similarity between the second vector and the first vector; and recommending the target entity.

## Description

### TECHNICAL FIELD

Embodiments of the present disclosure relate to the field of knowledge graph technologies, and more particularly, to a method and an apparatus for recommending an entity, an electronic device and a computer readable medium.

### BACKGROUND

When a user performs searches, browses a web page, etc., an entity related to the current search, web page, etc. (i.e., given information) may be recommended to the user for the user to understand contents related to the given information.

However, as existing methods for recommending entities are not suitable for medium- and long-tail entities (i.e., entities with less attention), and factors to be considered when searching for entities are not diversified, results recommended are inaccurate.

### SUMMARY

Embodiments of the present disclosure provide a method and apparatus for recommending an entity, an electronic device and a computer readable medium.

In a first aspect, an embodiment of the present disclosure provides a method for recommending an entity, including: determining a request entity, determining at least two characteristics of the request entity and determining a first vector corresponding to the request entity according to the at least two characteristics of the request entity; determining a plurality of candidate entities, determining at least one characteristic for each of the plurality of candidate entities, and determining a second vector corresponding to each of the plurality of candidate entities according to the characteristic of the candidate entity; determining a similarity between the second vector and the first vector; selecting at least one target entity from the plurality of candidate entities according to the similarity between the second vector and the first vector; and recommending the target entity.

In some embodiments, the request entity includes at least two senses and all of the characteristics of any two different senses of the request entity are not identical. Here, determining at least two characteristics of the request entity and determining the first vector corresponding to the request entity according to the at least two characteristics of the request entity includes: selecting one of the at least two senses of the request entity as a selected sense; and determining at least two characteristics of the selected sense of the request entity, and determining the first vector corresponding to the request entity according to the at least two characteristics of the selected sense of the request entity.

In some embodiments, determining the plurality of candidate entities includes selecting, from all entities in a preset first database, entities having at least one characteristic identical to that of the request entity, as the candidate entities.

In some embodiments, the request entity, the characteristics of the request entity, the candidate entities and the characteristics of the candidate entities are all included in a preset second database. Here, determining the first vector corresponding to the request entity according to the at least two characteristics of the request entity includes converting each characteristic of the request entity to an m-dimensional first characteristic vector according to a preset first algorithm, m being a positive integer; and superposing all the first characteristic vectors according to a preset second algorithm, to obtain the first vector. Further, determining the second vector corresponding to each of the plurality of candidate entities according to the characteristic of the candidate entity includes converting each characteristic of each of the plurality of candidate entities to an m-dimensional second characteristic vector, respectively, according to the first algorithm; and superposing all the second characteristic vectors corresponding to each of the plurality of candidate entities, respectively, according to the second algorithm, to obtain the second vector corresponding to the candidate entity.

In some embodiments, the first algorithm is the first algorithm is the Word2vec neural network algorithm, in which the first characteristic vector is an embedding vector, and the second characteristic vector is an embedding vector.

In some embodiments, the preset second database includes a preset knowledge graph.

In some embodiments, selecting the at least one target entity from the plurality of candidate entities according to the similarity between the second vector and the first vector includes selecting, from the plurality of candidate entities, a candidate entity corresponding to a second vector with the similarity between the second vector and the first vector greater than a preset first threshold, as the target entity; or, sorting the candidate entities in descending order of the similarity between the second vector and the first vector, and selecting the first n candidate entities in the sorted sequence as the target entities, n being a preset positive integer.

In a second aspect, an embodiment of the present disclosure provides an apparatus for recommending an entity, including: a first vector determination module, configured to determine a request entity, to determine at least two characteristics of the request entity and to determine a first vector corresponding to the request entity according to the at least two characteristics of the request entity; a second vector determination module, configured to determine a plurality of candidate entities, to determine at least one characteristic for each of the plurality of candidate entities, and to determine a second vector corresponding to each of the plurality of candidate entities according to the characteristic of the candidate entity; a similarity determination module, configured to determine a similarity between the second vector and the first vector; a target entity selection module, configured to select at least one target entity from the plurality of candidate entities according to the similarity between the second vector and the first vector; and a recommendation module, configured to recommend the target entity.

In some embodiments, the request entity includes at least two senses and all of the characteristics of any two different senses of the request entity are not identical. The first vector determination module includes a sense selection unit, configured to select one of the at least two senses of the request entity as a selected sense; and the first vector determination module is configured to determine at least two characteristics of the selected sense of the request entity, and determine the first vector corresponding to the request entity according to the at least two characteristics of the selected sense of the request entity.

In some embodiments, the second vector determination module includes a candidate entity selection unit, configured to select, from all entities in a preset first database, entities having at least one characteristic identical to that of the request entity, as the candidate entities.

In some embodiments, the request entity, the characteristics of the request entity, the candidate entities and the characteristics of the candidate entities are all included in a preset second database. The first vector determination module includes a first characteristic vector conversion unit, configured to convert each characteristic of the request entity to an m-dimensional first characteristic vector according to a preset first algorithm, m being a positive integer; and a first vector superposition unit, configured to superpose all the first characteristic vectors according to a preset second algorithm, to obtain the first vector. The second vector determination module includes a second characteristic vector conversion unit, configured to convert each characteristic of each of the plurality of candidate entities to an m-dimensional second characteristic vector, respectively, according to the first algorithm; and a second vector superposition unit, configured to superpose all the second characteristic vectors corresponding to each of the plurality of candidate entities, respectively, according to the second algorithm, to obtain the second vector corresponding to the candidate entity.

In some embodiments, the first algorithm is the Word2vec neural network algorithm, in which the first characteristic vector is an embedding vector, and the second characteristic vector is an embedding vector.

In some embodiments, the preset second database includes a preset knowledge graph.

In some embodiments, the target entity selection module is configured to select, from the plurality of candidate entities, a candidate entity corresponding to a second vector with the similarity between the second vector and the first vector greater than a preset first threshold, as the target entity; or, the target entity selection module is configured to sort the candidate entities in descending order of the similarity between the second vector and the first vector, and selecting the first n candidate entities in the sorted sequence as the target entities, n being a preset positive integer.

In a third aspect, an embodiment of the present disclosure provides an electronic device, including: one or more processors; a storage device having one or more programs stored thereon, wherein when the one or more programs are executed by the one or more processors, the one or more processors are configured to implement any method for recommending an entity described above.

In a fourth aspect, an embodiment of the present disclosure provides a computer readable medium having a computer program stored thereon, wherein when the program is executed by a processor, the program implements any method for recommending an entity described above.

According to the method for recommending an entity in the embodiments of the present disclosure, the first vector is created according to a plurality of characteristics (knowledge) related to the request entity, such that the first vector represents different properties of the request entity, which may completely and fully depict the request entity, i.e., presenting an enhanced capability of characterization. By determining the similarity between the first vector and the second vector of the candidate entity, an entity that is close to the request entity on the whole, namely, an entity having a higher correlation with the request entity, may be obtained. Consequently, this allows for accurate recommendations and may also be applicable to medium and long tail entities.

### BRIEF DESCRIPTION OF THE DRAWINGS

The accompanying drawings are intended to provide further understanding of the embodiments of the present disclosure and constitute a part of the specification. The accompanying drawings are used to explain the present disclosure together with the embodiments of the present disclosure, and cannot be construed as a limit to the present disclosure. The above and other features and advantages will become more apparent to those skilled in the art from the description of detailed example embodiments made with reference to the drawings.
FIG 1 is a flowchart of a method for recommending an entity according to an embodiment of the present disclosure.
FIG. 2 is a partial flowchart showing the block S100 in another method for recommending an entity according to an embodiment of the present disclosure.
FIG. 3 is a partial flowchart showing the block S200 in another method for recommending an entity according to an embodiment of the present disclosure.
FIG. 4 is a partial flowchart showing the block S100 in another method for recommending an entity according to an embodiment of the present disclosure.
FIG. 5 is a partial flowchart showing the block S200 in another method for recommending an entity according to an embodiment of the present disclosure.
FIG. 6 is a partial flowchart showing the block S400 in another method for recommending an entity according to an embodiment of the present disclosure.
FIG. 7 is a partial flowchart showing the block S400 in another method for recommending an entity according to an embodiment of the present disclosure.
FIG. 8 is a block diagram of an apparatus for recommending an entity according to an embodiment of the present disclosure.
FIG. 9 is a block diagram showing the first vector determination module in another apparatus for recommending an entity according to an embodiment of the present disclosure.
FIG. 10 is a block diagram showing the second vector determination module in another apparatus for recommending an entity according to an embodiment of the present disclosure.

### DETAILED DESCRIPTION

To enable those skilled in the art to better understand the technical solutions of the present disclosure, a method and apparatus for recommending an entity, an electronic device and a computer readable medium according to the present disclosure are described in detail below with reference to the accompanying drawings.

Example embodiments are described in detail hereinafter with reference to the accompanying drawings. The example embodiments may be embodied in a variety of ways without being construed as limits to the embodiments of the present disclosure. Rather, these embodiments are provided so as to thoroughly and completely explain the present disclosure, and to help those skilled in the art understand the scope of the present disclosure.

The term "and/or" as used herein includes any and all combinations of one or more of the associated listed items.

All terms (including technical and scientific terms) used herein have the same meaning as commonly understood by those skilled in the art, unless otherwise defined. It will also be understood that terms, such as those defined in commonly used dictionaries, should be interpreted as having meanings consistent with their meanings in the context of the related art and of the present disclosure, and will not be construed as having an idealized or excessively formalized meaning, unless specifically defined herein.

In the present disclosure, the following technical terms should be understood as follows unless otherwise specified.

An entity (or a concept) refers to a specific physical entity or abstract concept that exists or existed in the real world, such as a person, an object, a structure, a product, a building, a place, a county, an organization, a piece of work of art, science and technology, a theorem and so on.

A knowledge graph is a database indicating relationships among different entities and attributes of the entities. In the knowledge graph, each entity is represented as a node. Edges are connected between the entities, or between an entity and its corresponding value, thereby forming a structured, graph-like database. Here, the connection (edge) between the entities represents a relationship between the entities. For example, the entity Zhang San (person) is father of the entity Li Si (person. The connection (edge) between an entity and a value indicates an attribute that the entity has the value. For example, the value of the phone number of the entity Zhang San (person) is A.

Recommending an entity means that entities related to given information are found according to the given information, and recommended to a user, so that the user may better understand the given information or the content related to the given information. Specifically, recommending the entity may be used to recommend entities related to a search term in a network searching environment; or to recommend entities related to the current topic (such as a FEED flow topic) or a webpage. Consequently, the above-mentioned given information may include a search request, a topic, a web page or the like.

According to some methods for recommending entities, the number of times each entity and a request entity (such as an entity searched by the user) present concurrently may be counted. That is, the number of times each entity and the request entity present in a search log, a webpage, etc., concurrently, may be counted. Entities with a greater number of times of co-occurrence are recommended, since those entities are supposed to have a higher relevance with the request entity. Alternatively, entities associated with the request entity in the knowledge graph may also be recommended.

However, the above methods are only applicable to entities that are more concerned (i.e., high-frequency entities), namely, entities with high page view (pv). For low-frequency entities that are less concerned (also known as medium and long tail entities), the number of times those entities present concurrently with other entities is generally very low. Therefore, it is not possible to select entities with a high number of times of co-occurrence. Additionally, since correlations of the low-frequency entities in the knowledge graph are generally incomplete, it is difficult to find entities that are highly relevant to them through correlation.

In other methods for recommending an entity, an entity that has similar characteristics (e.g., classification, labeling) to the request entity may be recommended.

However, due to limitations of labeling and classification, such methods generally depict the characteristics of the entity roughly, and cannot fully characterize the correlations between the entities. Consequently, the recommended entities are often not quite relevant to the request entity. For example, the only common characteristic between the recommended entities and the request entity may be "both are British", which is a commonality of little significance).

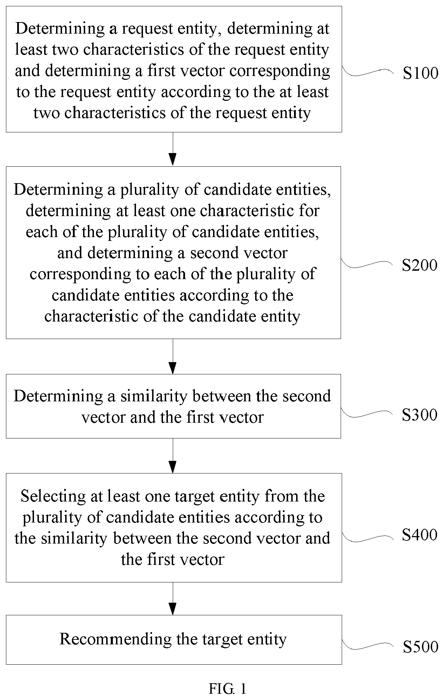

FIG. 1 is a flowchart of a method for recommending an entity according to an embodiment of the present disclosure.

In a first aspect, with reference to FIG. 1, an embodiment of the present disclosure provides a method for recommending an entity, which includes the following steps.

At block S100, a request entity is determined. Further, at least two characteristics of the request entity are determined. Further, a first vector corresponding to the request entity is determined according to the at least two characteristics of the request entity.

The request entity refers to finding entities related to the request entity according to the request entity and finally recommending the related entities found.

Determining the request entity means that the request entity is filtered out from given information. For example, when a user inputs a noun of an entity directly for searching, the entity may be obtained directly and used as the request entity. Alternatively, when the user inputs a question for searching, the most important entity may be filtered out from the question through semantic analysis technologies and used as the request entity. Alternatively, when an entity is required to be recommended according to a topic (such as a FEED flow topic) or a webpage, the most important entity may be filtered out from the topic or the webpage through keyword extraction technologies and used as the request entity.

Each entity necessarily follows some characteristics, relationships, attributes, etc., which are the characteristics of the entity, or the "knowledge" of the entity. The characteristics of the entity may include a superordinate concept of the entity, a category to which the entity belongs, a label associated with the entity, a description text of the entity that may be a phrase or a paragraph of text, such as a description of an entity in a web page, a top list to which the entity belongs, an attribute of the entity, and so on. For example, characteristics of the entity "Newton" may include "being a British", "being a scientist", "discovering Newton's laws of motion", "creating Calculus with Leibniz", and so on.

In this step, at least two characteristics related to the request entity are required to be determined, e.g., from a knowledge graph, a web page, or the like. Then, the first vector may be created according to the determined characteristics, so that the first vector represents a plurality of characteristics of the request entity.

At block S200, a plurality of candidate entities are determined. Further, at least one characteristic is determined for each of the plurality of candidate entities. Further, a second vector corresponding to each of the plurality of candidate entities is determined according to the characteristic of the candidate entity.

First, a plurality of entities that are likely to be recommended as entities are determined as the candidate entities. Then, at least one related characteristic (knowledge) may be determined for each of the plurality of candidate entities, respectively. Then, a second vector may be created corresponding to each of the plurality of candidate entities according to the characteristic related to the candidate entity, such that the total number of the second vectors is equal to that of the candidate entities, each second vector being relevant to the characteristic of the candidate entity corresponding to the second vector.

At block S300, a similarity between the second vector and the first vector is determined.

The similarity may be determined between each of the second vectors and each of the first vectors, respectively. The similarity represents a degree of similarity between the characteristic (knowledge) of each of the candidate entities and that of the request entity, namely, the correlation between each of the candidate entities and the request entity.

There are many methods available for determining the similarity between the vectors. For example, a cosine similarity between the second vector and the first vector, i.e., a fractional value (between 0 and 1) of the angle between the two vectors may be calculated. The closer that the fractional value is to 1, the smaller the angle between the two vectors is, and the higher the similarity between the two vectors is. Of course, it is also possible to represent the similarity between the vectors with the Euclidean distance, the Manhattan distance, or the like.

At block S400, at least one target entity is selected from the plurality of candidate entities according to the similarity between the second vector and the first vector.

After determining the similarity between the second vector and the first vector, a candidate entity having a higher correlation with the request entity, i.e., a candidate entity having a higher similarity between the second vector corresponding to the candidate entity and the first vector) is selected from the candidate entities according to the similarity, as the target entity.

At block S500, the target entity is recommended.

After being determined, the target entity is recommended to the user.

According to the method for recommending an entity in the embodiments of the present disclosure, the first vector is created according to a plurality of characteristics (knowledge) related to the request entity, such that the first vector represents different properties of the request entity, which may completely and fully depict the request entity, i.e., presenting an enhanced capability of characterization. By determining the similarity between the first vector and the second vector of the candidate entity, an entity that is close to the request entity on the whole, namely, an entity having a higher correlation with the request entity, may be obtained. Consequently, this allows for accurate recommendations and may also be applicable to medium and long tail entities.

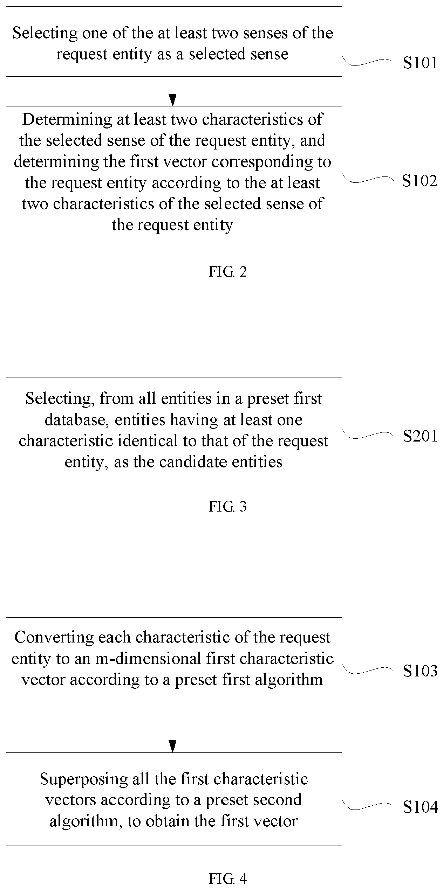

FIG. 2 is a partial flowchart showing the block S100 in another method for recommending an entity according to an embodiment of the present disclosure.

In some embodiments, the request entity includes at least two senses. Further, all of the characteristics of any two different senses of the request entity are not identical.

For a given noun (entity), it may have different meanings (senses), each of which may have different characteristics. For example, one sense of the entity Newton is "a British scientist", and another sense is "a mechanical unit". With respect to the sense of scientist, the characteristics of Newton include "being a British", "being a scientist", "discovering Newton's laws of motion", "creating Calculus with Leibniz", or the like. With respect to the sense of mechanical unit, the characteristics of Newton include "being an international unit for measuring force", "indicated by the symbol N", "named after the scientist Newton", or the like.

Referring to FIG. 2, for a request entity having a plurality of senses, the step of determining at least two characteristics of the request entity and determining the first vector corresponding to the request entity according to the at least two characteristics of the request entity in the above block S100 includes the following steps.

At block S101, one of the at least two senses of the request entity is selected as a selected sense.

First, one of the plurality of senses of the request entity is selected as the selected sense.

Here, there are many methods available for selecting the selected sense. For example, search logs, webpages and the like including the request entity may be analyzed so as to select the most commonly used (i.e., the hottest) sense therefrom as the selected sense. Alternatively, when the request entity is included in a question, in a webpages, or the like, named entity recognition may be performed on the information including the request entity, to analyze and obtain a sense that the request entity actually represents, and to use that sense as the selected sense.

At block S 102, at least two characteristics of the selected sense of the request entity are determined. Further, a first vector corresponding to the request entity is determined according to the at least two characteristics of the selected sense of the request entity.

After the selected sense is obtained, the first vector corresponding to the request entity is created only according to the characteristics corresponding to the selected sense.

In those methods in which an entity is recommended according to the number of times of co-occurrence, it is difficult to analyze and obtain the sense of the request entity in each co-occurrence. Therefore, the recommended result is a comprehensive result based on the plurality of senses of the request entity, rather than a result with respect to the expected sense. Therefore, there may be ambiguity in the recommendation, leading to poor accuracy.

On the other hand, according to the embodiments of the present disclosure, the first vector is only obtained according to a determined sense of the request entity. Accordingly, a recommended entity that is exactly relevant to the sense may be obtained according to the first vector, thereby avoiding ambiguity and improving accuracy of recommendation.

In the above embodiments, an example in which the first vector is determined with respect to one sense of the request entity is described. However, it is understood that the first vector may be determined with respect to each sense of the request entity, respectively, i.e., by selecting each sense as the selected item sequentially. In this way, different related entities may be recommended according to respective first vectors.

FIG. 3 is a partial flowchart showing the block S200 in another method for recommending an entity according to an embodiment of the present disclosure.

Referring to FIG. 3, the step of determining the plurality of candidate entities in the above block S200 includes the following step.

At block S201, entities having at least one characteristic identical to that of the request entity are selected from all the entities in a preset first database, as the candidate entities.

The total number of entities existing in reality is fairly large, most of which may almost be irrelevant to the request entity. Accordingly, it is not necessary to calculate the second vector based on all the entities. In an embodiment, all the entities in a database (first database) may be classified roughly to retrieve an entity having at least one characteristic identical to that of the request entity, namely, an entity having a certain correlation with the request entity, which is then added into a rough-classification pool as a candidate entity. Subsequently, calculations may merely be performed on the candidate entities in the rough-classification pool, thereby reducing the amount of calculation.

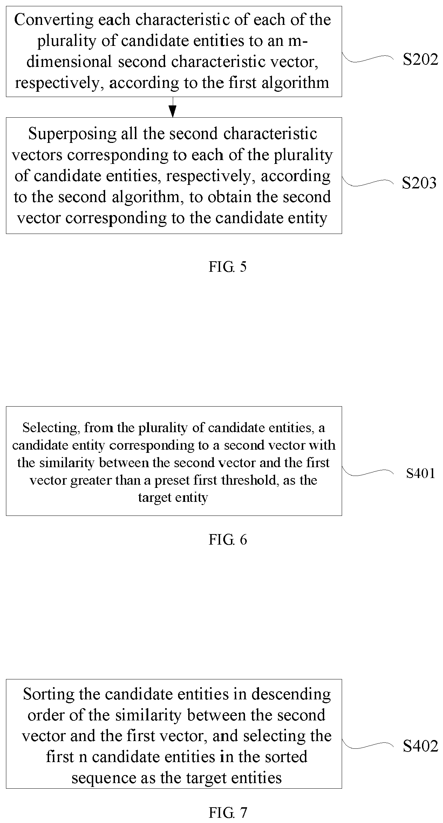

FIGS. 4 and 5 are partial flowcharts showing the blocks S100 and S200 in another method for recommending an entity according to an embodiment of the present disclosure.

In some embodiments, the request entity, the characteristics of the request entity, the candidate entities, and the characteristics of the candidate entities are all included in a preset second database.

In other words, the method for recommending an entity may be implemented based on a determined database (second database). Of course, the second database may be the same database as the first database mentioned above.

Referring to FIG. 4, the step of determining a first vector corresponding to the request entity according to the at least two characteristics of the request entity in the above block S100 includes the following steps.

At block S103, each characteristic of the request entity is converted to an m-dimensional first characteristic vector according to a preset first algorithm, m being a positive integer.

At block S104, all the first characteristic vectors are superposed according to a preset second algorithm, to obtain the first vector.

Referring to FIG. 5, the step of determining a second vector corresponding to each of the plurality of candidate entities according to the characteristic of the candidate entity in the above block S200 includes the following steps.

At block S202, each characteristic of each of the plurality of candidate entities is converted to an m-dimensional second characteristic vector, respectively, according to the first algorithm.

At block S203, all the second characteristic vectors corresponding to each of the plurality of candidate entities are superposed, respectively, according to the second algorithm, to obtain the second vector corresponding to the candidate entity.

That is to say, each characteristic of each entity (the request entity or the candidate entity) in the second database is converted into an m-dimensional characteristic vector through the same algorithm. Then, all the characteristic vectors corresponding to the same entity are superposed to form a vector corresponding to the entity (the first vector or the second vector) through the same algorithm.

In this way, the above method is equivalent to reorganizing the characteristics of an entity and fitting the reorganized contents to a vector (the first vector or the second vector), such that the vector may characterize all the characteristics contained in the entity and depict the entity better. Consequently, by comparing those vectors, it is possible to retrieve one or more entities having a highest correlation with the request entity accurately.

In some embodiments, the first algorithm may be a Word2vec neural network algorithm, in which the first characteristic vector may be an embedding vector, and the second characteristic vector may be an embedding vector.

Specifically, the Word2vec neural network algorithm may convert each characteristic (knowledge) of each entity to an embedding vector, and then superimpose a plurality of embedding vectors corresponding to one entity to obtain a vector corresponding to the entity.

The Word2vec neural network algorithm is a deep-learning neural network algorithm, which may map each word in a given text to a vector having a specific dimension (i.e., an embedding vector) that represents a relationship between the word and other words in the text. In the above embodiment, the second database may be used as the text, in which each characteristic corresponding to each entity (the request entity and the candidate entity) is mapped into a vector, respectively.

In some embodiments, the preset second database includes a preset knowledge graph.

When the second database includes the knowledge graph, the characteristics of the entity may include other entities, an attribute, a relationship, a value, or the like.

Of course, it should be understood that any specific preset data may be used as the second database (or the aforementioned first database), such as a web page, a text, or the like.

FIG. 6 and FIG. 7 are partial flowcharts showing the block S400 in another method for recommending an entity according to an embodiment of the present disclosure.

Referring to FIG. 6, in some embodiments, the step of selecting at least one target entity from the plurality of candidate entities according to the similarity between the second vector and the first vector in the above block S400 includes the following step.

At block S401, a candidate entity corresponding to a second vector with the similarity between the second vector and the first vector greater than a preset first threshold is selected from the plurality of candidate entities, as the target entity.

That is, the similarity between each second vector corresponding to each candidate entity and the first vector may be compared with a preset value (first threshold). A candidate entity corresponding to a second vector with the similarity greater than the first threshold is selected as the target entity.

Alternatively, referring to FIG. 7, in some embodiments, the step of selecting at least one target entity from the plurality of candidate entities according to the similarity between the second vector and the first vector in the above block S400 includes the following step.

At block S402, the candidate entities are sorted in descending order of the similarity between the second vector and the first vector. Further, the first n candidate entities in the sorted sequence are selected as the target entities, n being a preset positive integer.

That is to say, a plurality of candidate entities may be sorted in descending order according to respective similarities between the second vectors corresponding to respective candidate entities and the first vector. Then, a specific number of (i.e., n) candidate entities having the highest similarity may be selected as the target entities.

Of course, there may be many methods available for selecting the target entities from the candidate entities according to the similarity. For example, in an embodiment, only those target entities that satisfy both conditions in the above blocks S401 and S402 may be used as the target entities.

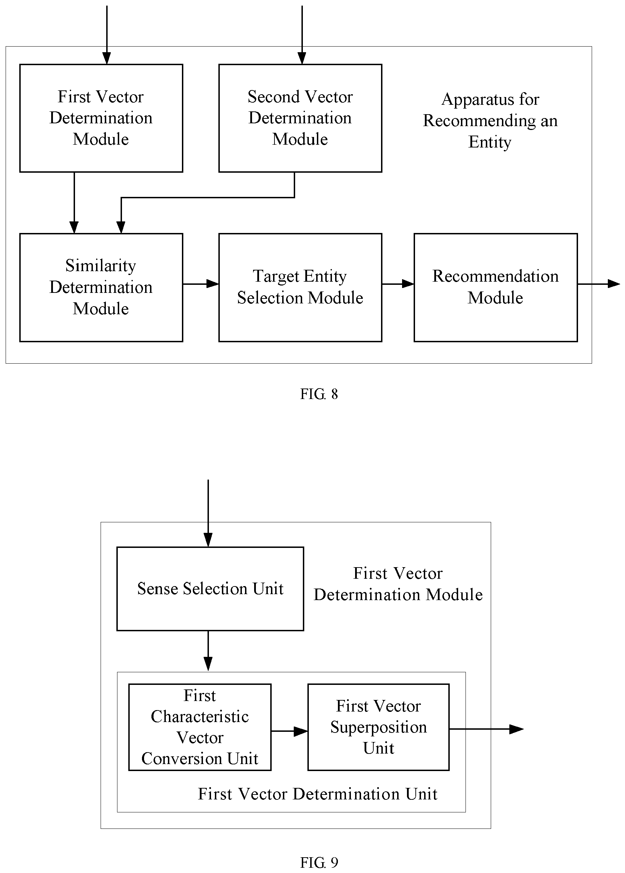

FIG. 8 is a block diagram of an apparatus for recommending an entity according to an embodiment of the present disclosure.

In a second aspect, referring to FIG. 8, an apparatus for recommending an entity according to the embodiment of the present disclosure includes: a first vector determination module, a second vector determination module, a similarity determination module, a target entity selection module and a recommendation module.

The first vector determination module is configured to determine a request entity, to determine at least two characteristics of the request entity and to determine a first vector corresponding to the request entity according to the at least two characteristics of the request entity.

The second vector determination module is configured to determine a plurality of candidate entities, to determine at least one characteristic for each of the plurality of candidate entities, and to determine a second vector corresponding to each of the plurality of candidate entities according to the characteristic of the candidate entity.

The similarity determination module is configured to determine a similarity between the second vector and the first vector.

The target entity selection module is configured to select at least one target entity from the plurality of candidate entities according to the similarity between the second vector and the first vector.

The recommendation module is configured to recommend the target entity.

FIG. 9 is a block diagram showing the first vector determination module in another apparatus for recommending an entity according to an embodiment of the present disclosure.

In some embodiments, the request entity includes at least two senses. Further, all of the characteristics of any two different senses of the request entity are not identical. Referring to FIG. 9, the first vector determination module includes a sense selection unit.

The sense selection unit is configured to select one of the at least two senses of the request entity as a selected sense.

The first vector determination module is configured to determine at least two characteristics of the selected sense of the request entity, and determine the first vector corresponding to the request entity according to the at least two characteristics of the selected sense of the request entity.

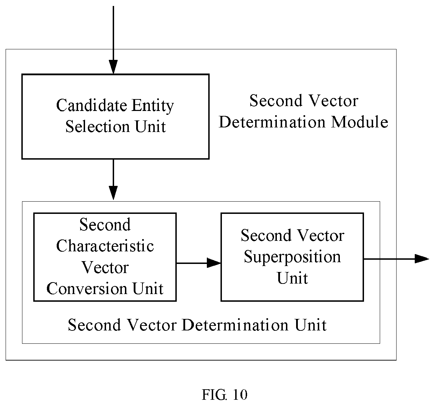

FIG. 10 is a block diagram showing the second vector determination module in another apparatus for recommending an entity according to an embodiment of the present disclosure.

Referring to FIG. 10, in some embodiments, the second vector determination module includes a candidate entity selection unit.

The candidate entity selection unit is configured to select, from all entities in a preset first database, entities having at least one characteristic identical to that of the request entity, as the candidate entities.

In some embodiments, the request entity, the characteristics of the request entity, the candidate entities and the characteristics of the candidate entities are all included in a preset second database.

Referring to FIG. 9, the first vector determination module includes a first characteristic vector conversion unit and a first vector superposition unit.

The first characteristic vector conversion unit is configured to convert each characteristic of the request entity to an m-dimensional first characteristic vector according to a preset first algorithm, m being a positive integer.

The first vector superposition unit is configured to superpose all the first characteristic vectors according to a preset second algorithm, to obtain the first vector.

In the embodiments, the first characteristic vector conversion unit and the first vector superposition unit described above may be components of the first vector determination unit.

Referring to FIG. 10, the second vector determination module includes a second characteristic vector conversion unit and a second vector superposition unit.

The second characteristic vector conversion unit is configured to convert each characteristic of each of the plurality of candidate entities to an m-dimensional second characteristic vector, respectively, according to the first algorithm.

The second vector superposition unit is configured to superpose all the second characteristic vectors corresponding to each of the plurality of candidate entities, respectively, according to the second algorithm, to obtain the second vector corresponding to the candidate entity.

In the embodiments, the second characteristic vector conversion unit and the second vector superposition unit described above may be components of the second vector determination unit.

In some embodiments, the first algorithm may be the Word2vec neural network algorithm, in which the first characteristic vector may be an embedding vector; and the second characteristic vector may be an embedding vector.

In some embodiments, the preset second database includes a preset knowledge graph.

In some embodiments, the target entity selection module is configured to select, from the plurality of candidate entities, a candidate entity corresponding to a second vector with the similarity between the second vector and the first vector greater than a preset first threshold, as the target entity.

Alternatively, the target entity selection module is configured to sort the candidate entities in descending order of the similarity between the second vector and the first vector, and selecting the first n candidate entities in the sorted sequence as the target entities, n being a preset positive integer.

In a third aspect, an embodiment of the present disclosure provides an electronic device, including: one or more processors; a storage device having one or more programs stored thereon, wherein when the one or more programs are executed by the one or more processors, the one or more processors are configured to implement any method for recommending an entity described above.

In a fourth aspect, an embodiment of the present disclosure provides a computer readable medium having a computer program stored thereon, wherein when the program is executed by a processor, the program implements any method for recommending an entity described above.

Those skilled in the art will appreciate that all or some of the blocks, systems, and functional modules/units of the methods disclosed above may be implemented as software, firmware, hardware, and suitable combinations thereof. When the method is implemented as hardware, the division between the aforementioned functional modules/units does not necessarily correspond to the division of physical components; for example, a physical component may have different functions, or one function or block may be performed by several physical components. Some or all physical components may be implemented as software executed by a processor, such as a central processing unit, a digital signal processor or a microprocessor, implemented as hardware, or implemented as an integrated circuit, such as an application specific integrated circuit. Such software may be distributed on a computer readable medium, which may include a computer storage medium (or a non-transitory medium) and a communication medium (or a transitory medium). As is well known to those skilled in the art, the term computer storage medium includes volatile and nonvolatile, removable and non-removable medium implemented in any method or technology for storing information (such as computer readable instructions, data structures, program modules or other data). The computer storage medium includes, but is not limited to, RAM, ROM, EEPROM, a flash memory or other storage technology, CD-ROM, a digital versatile disc (DVD) or other optical disc memory, a magnetic cartridge, a magnetic tape, a magnetic disk storage or other magnetic storage device, or any other medium configured to store desired information and that may be accessed by a computer. Moreover, it is well known to those skilled in the art that the communication medium typically includes computer readable instructions, data structures, program modules or other data in a modulated data signal, such as a carrier wave or any other transport mechanism, and may include any information delivery medium.

The example embodiments have been disclosed herein, and although specific terms are adopted, the terms are intended to be used only as a generic description and should not be construed as limits. Accordingly, it will be understood by those skilled in the art that various changes in the form and details may be made without departing from the scope of the present disclosure defined by the attached claims.

## Claims

1. A method for recommending an entity, comprising:
determining (S100) a request entity, determining at least two characteristics of the request entity and determining a first vector corresponding to the request entity according to the at least two characteristics of the request entity;
determining (S200) a plurality of candidate entities, determining at least one characteristic for each of the plurality of candidate entities, and determining a second vector corresponding to each of the plurality of candidate entities according to the characteristic of the candidate entity;
determining (S300) a similarity between the second vector and the first vector;
selecting (S400) at least one target entity from the plurality of candidate entities according to the similarity between the second vector and the first vector; and
recommending (S500) the target entity.

2. The method according to claim 1, wherein the request entity comprises at least two senses, and
wherein all of the characteristics of any two different senses of the request entity are not identical, and
determining at least two characteristics of the request entity and determining the first vector corresponding to the request entity according to the at least two characteristics of the request entity comprises:
selecting S101) one of the at least two senses of the request entity as a selected sense; and
determining (S102) at least two characteristics of the selected sense of the request entity, and determining the first vector corresponding to the request entity according to the at least two characteristics of the selected sense of the request entity.

3. The method according to claim 1 or 2, wherein determining the plurality of candidate entities comprises:
selecting (S201), from all entities in a preset first database, entities having at least one characteristic identical to that of the request entity, as the candidate entities.

4. The method according to any of claims 1-3, wherein the request entity, the characteristics of the request entity, the candidate entities and the characteristics of the candidate entities are all included in a preset second database;
determining the first vector corresponding to the request entity according to the at least two characteristics of the request entity comprises: converting (S103) each characteristic of the request entity to an m-dimensional first characteristic vector according to a preset first algorithm, m being a positive integer; and superposing (S104) all the first characteristic vectors according to a preset second algorithm, to obtain the first vector; and
determining the second vector corresponding to each of the plurality of candidate entities according to the characteristic of the candidate entity comprises: converting (S202) each characteristic of each of the plurality of candidate entities to an m-dimensional second characteristic vector, respectively, according to the first algorithm; and superposing (S203) all the second characteristic vectors corresponding to each of the plurality of candidate entities, respectively, according to the second algorithm, to obtain the second vector corresponding to the candidate entity.

5. The method according to claim 4, wherein
the first algorithm is the Word2vec neural network algorithm;
the first characteristic vector is an embedding vector; and
the second characteristic vector is an embedding vector.

6. The method according to claim 4, wherein
the preset second database comprises a preset knowledge graph.

7. The method according to any of claims 1-6, wherein selecting the at least one target entity from the plurality of candidate entities according to the similarity between the second vector and the first vector comprises:
selecting (S401), from the plurality of candidate entities, a candidate entity corresponding to a second vector with the similarity between the second vector and the first vector greater than a preset first threshold, as the target entity;
or,
sorting (S402) the candidate entities in descending order of the similarity between the second vector and the first vector, and selecting the first n candidate entities in the sorted sequence as the target entities, n being a preset positive integer.

8. An apparatus for recommending an entity, comprising:
a first vector determination module, configured to determine a request entity, to determine at least two characteristics of the request entity and to determine a first vector corresponding to the request entity according to the at least two characteristics of the request entity;
a second vector determination module, configured to determine a plurality of candidate entities, to determine at least one characteristic for each of the plurality of candidate entities, and to determine a second vector corresponding to each of the plurality of candidate entities according to the characteristic of the candidate entity;
a similarity determination module, configured to determine a similarity between the second vector and the first vector;
a target entity selection module, configured to select at least one target entity from the plurality of candidate entities according to the similarity between the second vector and the first vector; and
a recommendation module, configured to recommend the target entity.

9. The apparatus according to claim 8, wherein the request entity comprises at least two senses,
wherein all of the characteristics of any two different senses of the request entity are not identical, and
the first vector determination module comprises:
a sense selection unit, configured to select one of the at least two senses of the request entity as a selected sense; and
the first vector determination module is configured to determine at least two characteristics of the selected sense of the request entity, and determine the first vector corresponding to the request entity according to the at least two characteristics of the selected sense of the request entity.

10. The apparatus according to claim 8 or 9, wherein the second vector determination module comprises:
a candidate entity selection unit, configured to select, from all entities in a preset first database, entities having at least one characteristic identical to that of the request entity, as the candidate entities.

11. The apparatus according to any of claims 8-10, wherein the request entity, the characteristics of the request entity, the candidate entities and the characteristics of the candidate entities are all included in a preset second database;
the first vector determination module comprises:
a first characteristic vector conversion unit, configured to convert each characteristic of the request entity to an m-dimensional first characteristic vector according to a preset first algorithm, m being a positive integer; and
a first vector superposition unit, configured to superpose all the first characteristic vectors according to a preset second algorithm, to obtain the first vector; and
the second vector determination module comprises:
a second characteristic vector conversion unit, configured to convert each characteristic of each of the plurality of candidate entities to an m-dimensional second characteristic vector, respectively, according to the first algorithm; and
a second vector superposition unit, configured to superpose all the second characteristic vectors corresponding to each of the plurality of candidate entities, respectively, according to the second algorithm, to obtain the second vector corresponding to the candidate entity.

12. The apparatus according to claim 11, wherein
the first algorithm is the Word2vec neural network algorithm;
the first characteristic vector is an embedding vector; and
the second characteristic vector is an embedding vector.

13. The apparatus according to claim 11, wherein
the preset second database comprises a preset knowledge graph.

14. The apparatus according to any of claims 8-13, wherein
the target entity selection module is configured to select, from the plurality of candidate entities, a candidate entity corresponding to a second vector with the similarity between the second vector and the first vector greater than a preset first threshold, as the target entity;
or,
the target entity selection module is configured to sort the candidate entities in descending order of the similarity between the second vector and the first vector, and selecting the first n candidate entities in the sorted sequence as the target entities, n being a preset positive integer.

15. A computer readable medium having a computer program stored thereon, wherein when the program is executed by a processor, the program implements a method according to any one of claims 1 to 7.
